# EUROPEAN PATENT SPECIFICATION

(11) **EP 0 551 903 B1**
(45) Date of publication and mention of the grant of the patent: **13.11.1996**
(21) Application number: 93100486.5
(22) Date of filing: 14.01.1993
(51) Int. Cl.: C09B 29/40, C09B 67/48, D06P 3/52

(54) **Water-insoluble monoazodye and dyeing method employing it**
Wasserunlöslicher Monoazofarbstoff und ein ihn verwendendes Färbeverfahren
Colorant monoazoique insoluble dans l'eau et procédé de teinture l'employant

(30) Priority: 17.01.1992 JP 6844/92
(43) Date of publication of application: 21.07.1993
(73) Proprietor: DyStar Japan Ltd., Osaka (JP)
(72) Inventor: Himeno, Kiyoshi, Munakata-shi, Fukuoka-ken (JP); Hihara, Toshio, Kitakyushu-shi, Fukuoka-ken (JP); Hamano, Yoshiharu, Kitakyushu-shi, Fukuoka-ken (JP)
(74) Representative: Wächtershäuser, Günter, Prof. Dr.

(56) References cited:
- EP-A- 0 240 902
- US-A- 3 984 199

## Description

The present invention relates to a monoazodye. More particularly, it relates to a yellow-type monoazodye having a novel crystal modification, which is capable of uniformly dyeing polyester fibers even under high temperature and severe conditions.

In recent years, in the dyeing industry, various rationalization has been effected to dyeing methods. For example, to dye polyester fibers with a disperse dye, it has been common to employ a jet dyeing method for cloth and a cheese dyeing method or a package dyeing method for yarns. These dyeing methods adopt a system in which a dye dispersion is forcibly circulated into stationary dense layers formed by winding fibers in multiple layers. Accordingly, it is required more than ever that the dye particles dispersed in the dye bath are fine particles, and the dispersion stability in the dye bath is excellent. If dye particles are large, a phenomenon of filtration of dye particles by the fiber layers takes place, thus leading to problems such as irregular dyeing of the inner layer or the outer layer due to a penetration failure of the dye into the interior of the fibers or due to deposition of agglomerates, and a decrease in the fastness such as anti-abrasion fastness, due to deposition of the dye only on the fiber surface.

Therefore, a dye to be used for such dyeing methods is required to be excellent in the dispersibility in the dye bath and undergo no deterioration in the dispersibility within a wide temperature range of from room temperature to a high temperature at which the actual dyeing takes place.

However, the dispersibility of a dye is often likely to deteriorate when it is subjected to a high temperature in the dye bath, and as a result, the agglomerated dye is likely to deposit on the surface of the object to be dyed in the form of a filtration residue, as mentioned above, and the object to be dyed composed of multilayers tends to have different dyed color densities as between the outer layer portion and the inner layer portion, and thus it is hardly possible to obtain a dyed product having a uniform dyed color density.

From the viewpoint of conservation of energy and resources, there is a recent trend for severer dyeing conditions such as ① a lower bath ratio of the dye bath (the ratio of the object to be dyed to the dyeing solution has been lowered from 1:30 to 1:10), ② a lower proportion of a dispersant to be used (the ratio of the dye cake to the dispersant has been lowered from 1:3 to 1:1), and ③ a shorter time and a higher temperature for dyeing (from 1 hour at 130°C to 0.5 hour at 135°C). Each of these conditions adversely affects the dispersion stability of a dye. Accordingly, among dyes having relatively good dispersion stability under the conventional dyeing conditions, many will be regarded as having poor dispersion stability under severer conditions of recent dyeing methods.

For example, a carbazole-type monoazodye of the following formula (I): 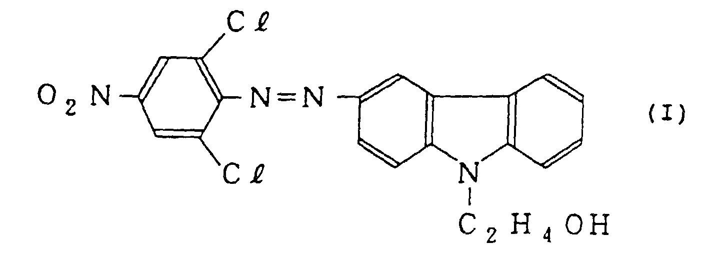 is known from German Patent 2,212,755 so long as its structure is concerned, and it can be prepared in accordance with a conventional method by subjecting a diazo component and a coupling component to a coupling reaction. This monoazodye is capable of uniformly dyeing polyester fibers under conventional mild dyeing conditions, and it is excellent in various types of fastness. However, when dyeing is conducted under severe conditions at a high temperature as mentioned above, the deterioration in the dispersibility of the dye is so much that it tends to be very difficult to obtain a dyed product having a uniform dyed color density.

Further, this dye has a problem also with respect to the compatibility with various dyeing auxiliaries. For example, its high temperature dispersion stability is very poor in the presence of Glauber's salt (Na₂SO₄). Accordingly, when a polyester/cotton blended yarn product is dyed by a combined use of e.g. a reactive dye in the presence of Glauber's salt, non-uniform dyeing will result. Further, it has a drawback that when it is used in combination with another dye, irregular coloring or non-uniform dyeing will result due to the poor compatibility with the combined dye.

It is an object of the present invention to solve the above problems and to provide a dye which is capable of presenting excellent dyeing even under severe conditions such as high temperature.

The present inventors have conducted extensive studies with respect to the above-described problems and as a result, have found that the carbazole-type monoazo compound of the above formula (I) has at least two crystal modifications, one of them is a crystal modification which is rather poor in the dispersion stability under high temperature dyeing conditions, a cake obtained by the conventional usual reaction for synthesis, has such a crystal modification, and the other is a novel crystal modification which is excellent in the dispersion stability even under high temperature severe dyeing conditions. Further, it has been found that the stability of a dye composition in a state dispersed in a high temperature dye bath depends largely on the crystal modification as well as the particle size of the dye, and the dispersion stability of the dye composition in a high temperature dye bath can be accomplished for the first time when the compound having the above novel crystal modification is employed. The present invention has been accomplished on the basis of this discovery.

Thus, the present invention provides a water-insoluble monoazodye of the following formula (I): 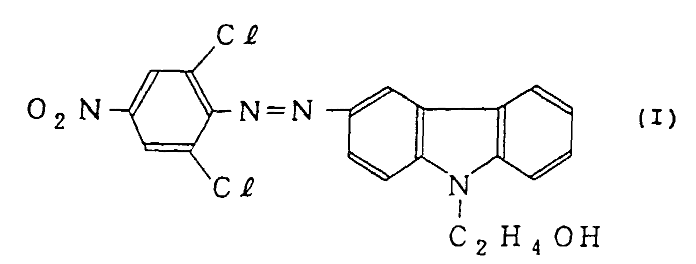 which has a crystal modification characterized by an X-ray diffraction pattern (CuKα) showing three strong peaks at angles (2θ) of diffraction of about 11.3°, 24.4° and 27.0° and three intermediate peaks at angles (2θ) of diffraction of about 10.3°, 21.1° and 29.5°.

Now, the present invention will be described in detail with reference to the preferred embodiments.

The monoazodye of the present invention having a novel crystal modification (hereinafter referred to as an α-type crystal modification) can be prepared in the following manner.

Namely, the monoazo compound of the above formula (I) can be prepared, for example, by diazotizing 2,6-dichloro-4-nitroaniline by a conventional method, followed by coupling with N-(hydroxyethyl)carbazole as a coupler in a dilute sulfuric acid medium at a temperature of from -5 to 15°C, preferably from 0 to 10°C for from 0.5 to 15 hours. The cake of the monoazo compound obtained by this synthesis, is of a substantially amorphous crystal modification (hereinafter referred to as a β-type crystal modification). In the present invention, this cake is further treated under a specific condition to convert it to the α-type crystal modification. For this treatment, it is possible to employ, for example, ① a method wherein the cake of the β-type crystal modification is dispersed in an aqueous medium and subjected to stirring treatment at a temperature of from 60 to 130°C, preferably from 80 to 100°C, for from 0.5 to 30 hours, preferably from 1 to 10 hours, if necessary in the presence of a dispersant such as a condensation product of naphthalene sulfonic acid with formaldehyde or a concentrated product of a sulfite pulp waste liquor containing sodium lignin sulfonate as the main component, or ② a method wherein the cake of the β-type crystal modification is dispersed in an organic solvent, for example, an alcohol such as methanol, ethanol or butanol, an ether such as dioxane, ethylene glycol, or glycol ether and subjected to stirring treatment at a temperature of from 15 to 100°C, preferably from 20 to 80°C, for from 0.5 to 10 hours.

In the accompanying drawings:

Figure 1 is a graph showing the X-ray diffraction pattern of the α-type crystal modification of the monoazo compound obtained in Example 1, wherein the abscissa represents the diffraction angle (2θ), and the ordinate represents the diffraction intensity.

Figure 2 is a graph showing the X-ray diffraction pattern of the β-type crystal modification obtained in Example 1, wherein the abscissa represents the diffraction angle (2θ), and the ordinate represents the diffraction intensity.

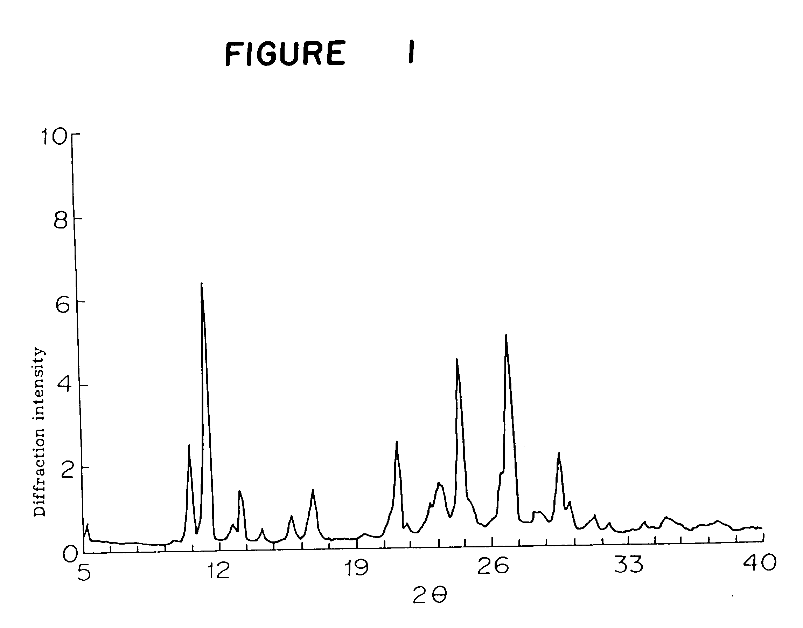

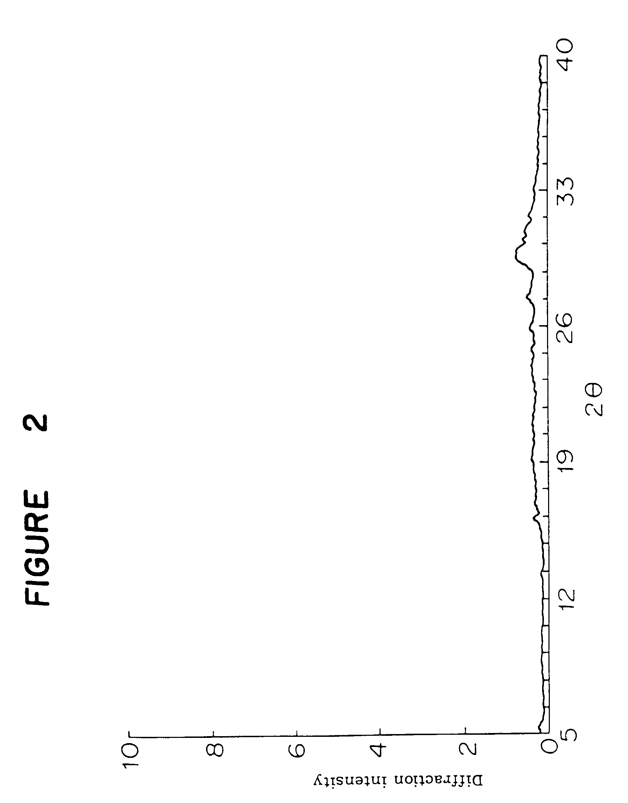

Now, the α-type crystal modification and the β-type crystal modification of the monoazo compound of the formula (I) will be described with reference to the accompanying drawings. Figures 1 and 2 show the X-ray diffraction patterns obtained by recording the states of diffraction by CuKα rays in the powder X-ray diffraction method by means of a proportional counter. In each Figure, the abscissa represents the angle of diffraction (2θ), and the ordinate represents the diffraction intensity. Figure 1 shows the α-type crystal modification as the novel crystal form of the present invention, which is characterized by three strong peaks at angles of diffraction (2θ) of about 11.3°, 24.4° and 27.0° and three intermediate peaks at angles of diffraction (2θ) of about 10.3°, 21.1° and 29.5°. Figure 2 shows the conventional β-type crystal modification, which is distinctly different from the α-type crystal modification in Figure 1.

The angles of diffraction of products of the same crystal form measured by the X-ray diffraction method should always agree within an error of about ±0.1°. Therefore, these two Figures clearly show the difference between the crystal modifications. Due to the difference in the crystal form, the behavior of the monoazo compound during the dyeing operation is different. Namely, in the case of the present invention, excellent dyeing can be conducted even when a dyeing method at a high temperature and under severe conditions, is employed.

Fibers which can be dyed by the monoazodye of the present invention, may, for example, be polyester fibers such as polyethylene terephthalate or a polycondensation product of terephthalic acid and 1,4-bis-(hydroxymethyl)cyclohexane, or blended yarn products or combined filament yarn products of such polyester fibers with natural fibers such as cotton or wool. To dye the polyester fibers with the monoazo dye of the present invention, a dye bath or a printing paste is prepared by dispersing the dye in an aqueous medium by using a dispersing agent such as a condensation product of naphthalene sulfonic acid with formaldehyde, a higher alcohol sulfuric acid ester or a higher alkylbenzene sulfonate in accordance with a conventional method, followed by dip dyeing or textile printing. Further, in the case of dip dyeing, the above mentioned dyeing treatment such as a high temperature dyeing method, a carrier dyeing method or a thermosol dyeing method may be used. Besides, even when severe dyeing conditions are used in these methods, the polyester fibers or the blended yarn products thereof can be dyed excellently, since the monoazodye of the present invention is excellent in the dispersion stability. Specifically, the polyester fibers can be subjected to exhaustion dyeing in an aqueous medium in the presence of a dispersing agent under such severe conditions that the dyeing temperature is from 125 to 140°C, the dye bath ratio is not higher than 15 times, and the proportion of the dispersing agent to the dye is not higher than 3 times by weight.

Further, in some cases, better results can be obtained by incorporating an acidic substance such as formic acid, acetic acid, phosphoric acid or ammonium sulfate to the dye bath.

The monoazodye of the formula (I) to be used for the method of the present invention, may be used in combination with other dyes, and in some cases better results such as an improvement of the dyeability may be obtained by the combination of the dyes.

The water-insoluble monoazodye having such a specific crystal modification of the present invention is excellent in the dispersion stability even at a high temperature and under severe dyeing conditions such as the ratio of the object to be dyed to the dyeing solution being 1:10, the ratio of the dye cake to the dispersing agent being 1:1 and the dyeing conditions being 0.5 hour at 135°C. The dyed cloth thereby obtained is excellent in the light-fastness and abrasion-fastness. Thus, the dye of the present invention is very useful from the viewpoint of conservation of energy and resources.

Now, the present invention will be described in detail with reference to Examples. However, it should be understood that the present invention is by no means restricted by such specific examples.

### EXAMPLE 1

### Preparation of dye crystals

4.2 g of N-hydroxyethylcarbazole was dispersed in 200 mℓ of a 10 wt% sulfuric acid aqueous solution at a temperature of from 5 to 8°C to obtain a coupling component. Then, 6.1 g of 43% nitrosyl sulfuric acid was added to 4.6 g of 98% sulfuric acid, and 4.1 g of 2,6-dichloro-4-nitroaniline was gradually added thereto under stirring at a temperature of from 20 to 30°C for diazotizing to obtain a diazotized solution. This diazotized solution was dropwise added to the above coupling component solution at a temperature of from 0 to 5°C, and the mixture was stirred for 10 hours at the same temperature. Precipitated crystals were collected by filtration, washed with water and dried to obtain 5.1 g of yellow crystals of the compound of the above formula (I). The powder of the monoazodye obtained by this reaction was analyzed by an X-ray diffraction method, whereby it was found to be a β-type crystal modification showing the X-ray diffraction pattern of Figure 2.

Then, the obtained β-type crystals were dispersed in water of ten times by volume, followed by stirring at a temperature of from 90 to 95°C for three hours for transformation of the crystals. After the transformation, the crystals were collected by filtration and dried, and the obtained crystals were analyzed by an X-ray diffraction method, whereby they were found to be of an α-type crystal modification showing the X-ray diffraction pattern of Figure 1.

### TEST EXAMPLE 1

### Example for dyeing

0.2 g of the monoazodye of the α-type crystal modification obtained in Example 1, was dispersed in 1ℓ of water containing 0.2 g of a naphthalene sulfonic acid-formaldehyde condensation product and 0.2 g of a higher alcohol sulfuric acid ester, to obtain a dye bath.

In this dye bath, 100 g of polyester fibers were dipped and dyed at 135°C for 30 minutes, followed by soaping, washing with water and drying, whereby the dispersibility of the dye was excellent, and the cloth was dyed uniformly. The obtained dyed cloth was yellow and excellent in the light-fastness at a level of grade 6 and in the abrasion-fastness at a level of grade 5.

A similar dyeing test was conducted by using the monoazo compound of the β-type crystal modification obtained during the preparation in Example 1, whereby partial agglomeration of the dye took place in the dye bath, the cloth was dyed non-uniformly, and the resulting abrasion-fastness was poor at a level of grade 1.

### TEST EXAMPLE 2

### Example for dyeing

Dyeing was conducted by a slightly mild dyeing method in the same manner as in Test Example 1 except that in Text Example 1, each of the naphthalene sulfonic acid-formaldehyde condensation product and the higher alcohol sulfuric acid ester was changed three times to 0.6 g, water was changed three times to 3 ℓ, and the dyeing conditions were changed to 60 minutes at 130°C, whereby with the α-type crystal modification of the present invention, dyeing was carried out as excellent as in Text Example 1, and the obtained dyed cloth was excellent in the light-fastness, at a level of grade 6 and in the abrasion-fastness at a level of grade 5. Whereas, when the β-type crystal modification was employed, a slight improvement as compared in Test Example 1 was observed, but dyeing of the cloth was still non-uniform, and the abrasion-fastness was at a level of grade 3.

## Claims

1. A water-insoluble monoazodye of the following formula (I): 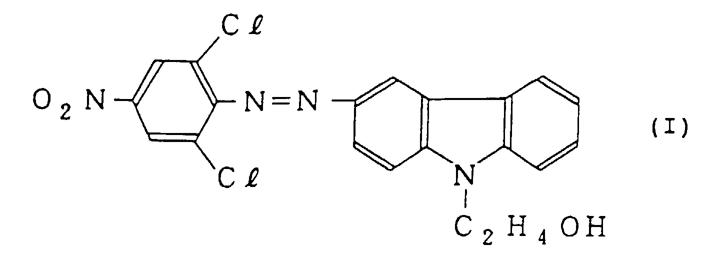 which has a crystal modification characterized by an X-ray diffraction pattern (CuKα) showing three strong peaks at angles (2θ) of diffraction of about 11.3°, 24.4° and 27.0° and three intermediate peaks at angles (2θ) of diffraction of about 10.3°, 21.1° and 29.5°.

2. The dye according to Claim 1, which is produced by diazotizing 2,6-dichloro-4-nitroaniline, followed by coupling with N-(hydroxyethyl) carbazole in a dilute sulfuric acid medium at a temperature of from -5 to 15°C, and subjecting a cake of the resulting monoazo compound to ① stirring treatment in an aqueous medium at a temperature of from 60 to 130°C for from 0.5 to 30 hours, or ② stirring treatment in an organic medium at a temperature of from 15 to 100°C for from 0.5 to 10 hours, for crystal transformation.

3. A method for dyeing polyester fibers, which comprises subjecting the polyester fibers to exhaustion dyeing with a water-insoluble monoazodye in an aqueous medium in the presence of a dispersant under such conditions that the dyeing temperature is from 125 to 140°C, the dye bath ratio is not higher than 15 times, the ratio of the dispersant to the dye is not higher than 3 times by weight, wherein as the water-insoluble monoazodye, a water-insoluble monoazodye of the following formula (I): 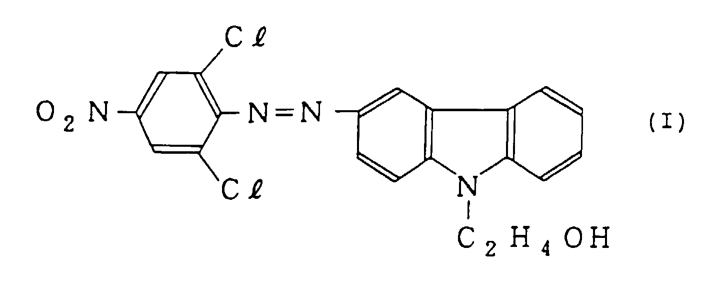 which has a crystal modification characterized by an X-ray diffraction pattern (CuKα) showing three strong peaks at angles (2θ) of diffraction of about 11.3°, 24.4° and 27.0° and three intermediate peaks at angles (2θ) of diffraction of about 10.3°, 21.1° and 29.5°, is used.

4. Polyester fibers dyed with a monoazodye of the following formula (I): 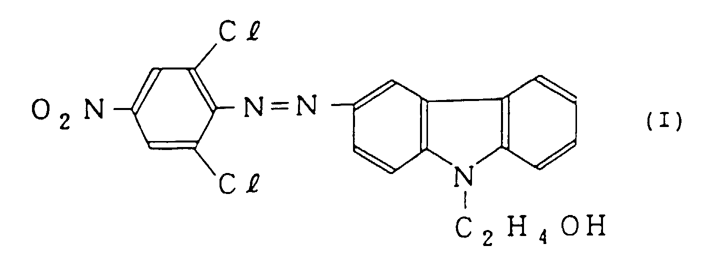 which has a crystal modification characterized by an X-ray diffraction pattern (CuKα) showing three strong peaks at angles (2θ) of diffraction of about 11.3°, 24.4° and 27.0° and three intermediate peaks at angles (2θ) of diffraction of about 10.3°, 21.1° and 29.5°.

## Patentansprüche

1. Wasserunlöslicher Monoazofarbstoff der folgenden Formel (I): 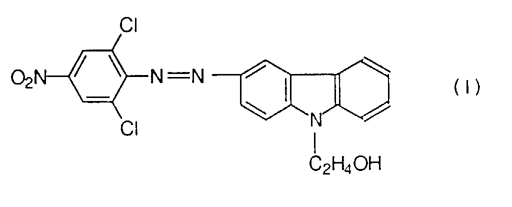 der eine Kristallmodifikation aufweist, die durch ein Röntgenbeugungsmuster (CuKα) charakterisiert ist, das drei starke Peaks bei Beugungswinkeln (2θ) von etwa 11,3°, 24,4° und 27,0° sowie drei Zwischenpeaks bei Beugungswinkeln (2θ) von etwa 10,3°, 21,1° und 29,5° aufweist.

2. Farbstoff nach Anspruch 1, hergestellt durch Diazotieren von 2,6-Dichlor-4-nitroanilin, gefolgt vom Kuppeln mit N-(Hydroxyethyl)carbazol in einem verdünnten Schwefelsäure-Medium bei einer Temperatur von -5 bis 15°C und Unterwerfen eines Kuchens aus der resultierenden Monoazoverbindung ① einer Rührbehandlung in einem wässerigen Medium bei einer Temperatur von 60 bis 130°C für 0,5 bis 30 Stunden oder ② einer Rührbehandlung in einem organischen Medium bei einer Temperatur von 15 bis 100°C für 0,5 bis 10 Stunden zur Kristallumwandlung.

3. Verfahren zum Färben von Polyesterfasern, umfassend das Ausziehfärben der Polyesterfasern mit einem wasserunlöslichen Monoazofarbstoff in einem wässerigen Medium in Gegenwart eines Dispersionsmittels unter solchen Bedingungen, daß die Färbetemperatur von 125 bis 140°C, dem Färbebad-Verhältnis nicht mehr als das 15-fache, das Verhältnis des Dispersionsmittels zum Farbstoff nicht mehr als das 3-farbe, bezogen auf das Gewicht, beträgt, wobei als der wasserunlösliche Monoazofarbstoff ein wasserunlöslicher Monoazofarbstoff der folgenden Formel (I) eingesetzt wird: 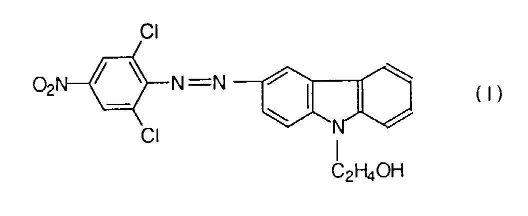 der eine Kristallmodifikation aufweist, die durch ein Röntgenbeugungsmuster (CuKα) charakterisiert ist, das drei starke Peaks bei Beugungswinkeln (2θ) von etwa 11,3°, 24,4° und 27,0° sowie drei Zwischenpeaks bei Beugungswinkeln (2θ) von etwa 10,3°, 21,1° und 29,5° aufweist.

4. Polyesterfasern, die mit einem Monoazofarbstoff der folgenden Formel (I) gefärbt sind: 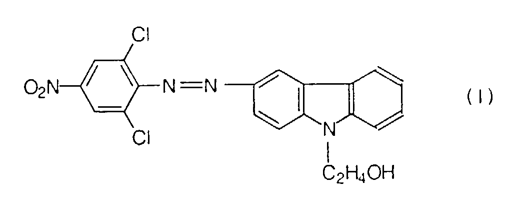 der eine Kristallmodifikation aufweist, die durch ein Röntgenbeugungsmuster (CuKα) charakterisiert ist, das drei starke Peaks bei Beugungswinkeln (2θ) von etwa 11,3°, 24,4° und 27,0° sowie drei Zwischenpeaks bei Beugungswinkeln (2θ) von etwa 10,3°, 21,1° und 29,5° aufweist.

## Revendications

1. Colorant monoazoïque insoluble dans l'eau ayant la formule (I) suivante : 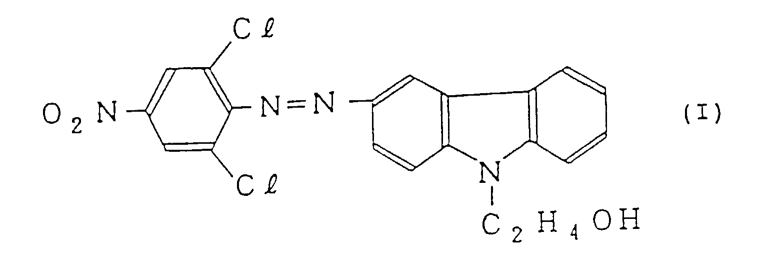 qui a une modification cristalline caractérisée par un diagramme de diffraction des rayons X (CuKα) présentant trois pics importants aux angles de diffraction (2θ) d'environ 11,3°, 24,4° et 27,0° et trois pics intermédiaires aux angles de diffraction (2θ) d'environ 10,3°, 21,1° et 29,5°.

2. Colorant selon la revendication 1, qui est produit en diazotant de la 2,6-dichloro-4-nitroaniline, en faisant suivre par le couplage avec du N-(hydroxyéthyl)carbazole dans un milieu d'acide sulfurique dilué à une température de -5 à 15°C, et en soumettant un gâteau du composé monoazoïque résultant ① à un traitement d'agitation dans un milieu aqueux à une température de 60 à 130°C pendant 0,5 à 30 heures, ou ② à un traitement d'agitation dans un milieu organique à une température de 15 à 100°C pendant 0,5 à 10 heures, en vue d'une transformation cristalline.

3. Procédé de teinture de fibres de polyester, qui comprend la teinture par épuisement des fibres de polyester avec un colorant monoazoïque insoluble dans l'eau dans un milieu aqueux en présence d'un dispersant dans des conditions de température de teinture de 125 à 140°C, de rapport de bain de teinture non supérieur à 15 fois, de rapport du dispersant au colorant non supérieur à 3 fois en poids, dans lequel on utilise, en tant que colorant monoazoïque insoluble dans l'eau, un colorant monoazoïque insoluble dans l'eau ayant la formule (I) suivante : 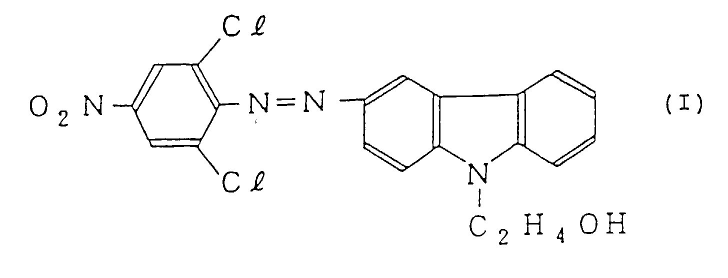 qui a une modification cristalline caractérisée par un diagramme de diffraction des rayons X (CuKα) présentant trois pics importants aux angles de diffraction (2θ) d'environ 11,3°, 24,4° et 27,0° et trois pics intermédiaires aux angles de diffraction (2θ) d'environ 10,3°, 21,1° et 29,5°.

4. Fibres de polyester teintes avec un colorant monoazoïque ayant la formule (I) suivante : 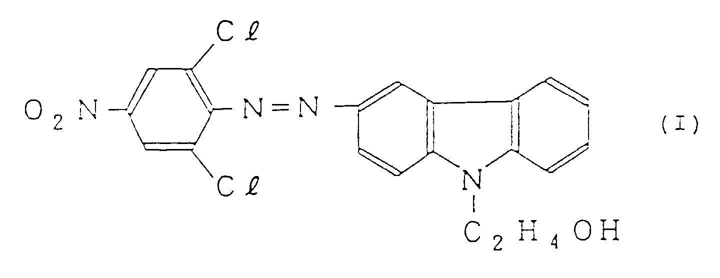 qui a une modification cristalline caractérisée par un diagramme de diffraction des rayons X (CuKα) présentant trois pics importants aux angles de diffraction (2θ) d'environ 11,3°, 24,4° et 27,0° et trois pics intermédiaires aux angles de diffraction (2θ) d'environ 10,3°, 21,1° et 29,5°.
